Europäisches Patentamt

European Patent Office

Office européen des brevets

(19)

(11) Veröffentlichungsnummer: **0 153 735**
**B1**

(12) **EUROPÄISCHE PATENTSCHRIFT**

(45) Veröffentlichungstag der Patentschrift:
20.09.89

(51) Int. Cl.⁴: **B 60 R 22/20**, B 60 R 22/46

(21) Anmeldenummer: **85102116.2**

(22) Anmeldetag: **27.02.85**

(54) Sicherheitsgurtsystem.

(30) Priorität: **29.02.84 DE 3407377**

(43) Veröffentlichungstag der Anmeldung:
**04.09.85 Patentblatt 85/36**

(45) Bekanntmachung des Hinweises auf die Patenterteilung: **20.09.89 Patentblatt 89/38**

(84) Benannte Vertragsstaaten:
**DE FR GB IT SE**

(56) Entgegenhaltungen:
EP—A— 0 092 105
EP—A— 0 148 747
DE—A— 1 538 593
DE—A— 3 342 203
DE—B— 1 588 724
FR—A— 2 513 887
FR—A— 2 516 800
GB—A— 2 085 709
GB—A— 2 097 652
GB—A— 2 098 853
W. OPPELT "Kleines Handbuch technischer Regelvorgänge", vierte, neubearbeitete und erweiterte Auflage, 1964, Verlag Chemie GmbH, Weinheim

(73) Patentinhaber: **AUTOFLUG GMBH**
**Industriestrasse 10 Postfach 1180**
**D-2084 Rellingen (DE)**

(72) Erfinder: **Sedlmayr, Gerhard, Dr.**
**Königgrätzstrasse 1**
**D-2000 Hamburg 52 (DE)**
Erfinder: **Just, Herbert, Dipl.-Ing.**
**Bundesstrasse 1**
**D-2059 Hohnstorf (DE)**

(74) Vertreter: **Müller, Karl-Ernst, Dr. et al**
**Patentanwälte Becker, Müller & Pust Eisenhüttenstrasse 2**
**D-4030 Ratingen 1 (DE)**

## Beschreibung

Die Erfindung betrifft ein Sicherheitsgurtsystem insbesondere für Kraftfahrzeuge, mit einem Dreipunkt-Sicherheitsgurt, einem an einem Fahrzeugaufbauteil befestigten selbstsperrenden Gurtaufroller sowie einer an dem Fahrzeugaufbauteil angeordneten Klemmeinrichtung für das Gurtband, die wenigstens eine bewegliche Klemmbacke aufweist, wobei die Klemmeinrichtung an dem Fahrzeugaufbauteil beweglich geführt und für die Bewegung der Klemmeinrichtung ein Antrieb vorgesehen ist.

Bei einem derartigen gattungsgemäßen Sicherheitsgurtsystem (EP-A-0 148 747, veröffentlicht am 17.07.85) ist als Antrieb für die Bewegung der Klemmeinrichtung längs des Fahrzeugaufbauteils eine druckgasgetriebene Kolbeneinheit vorgesehen, deren Treibladung von einem mit dem Fahrzeug verbundenen Sensor ausgelöst wird. Dabei ist durch eine entsprechend vorgesehene Verbindung der Kolbeneinheit mit dem Betätigungsteil für die Klemmeinrichtung dafür gesorgt, daß auch die Klemmwirkung der Klemmeinrichtung mittelbar von dem Sensor ausgelöst wird. Entsprechende Gestaltungen in der Kolbeneinheit sind vorgesehen, um zunächst die Auslösung der Klemmwirkung und erst zeitlich danach die Längsbewegung der Klemmeinrichtung mit Strammung des Gurtbandes herbeizuführen. Nach Beendigung des Strammvorganges rastet die Klemmeinrichtung in ein Verriegelungsgehäuse ein, damit nicht durch weiteren Zug am Gurtband bei gleichzeitigem Nachlassen des Gasdrucks im Antrieb für die Klemmeinrichtung die Blockierung des Gurtbandes gelöst wird.

Mit einem derartigen Sicherheitsgurtsystem sollte erreicht werden, daß bei Beseitigung der am Körper des angeschnallten Insassen befindlichen Gurtlose gleichzeitig die Gurtlängung in einem solchen Umfang vermindert ist, daß eine Vorwärtsverlagerung der angeschnallten Person weitgehen ausgeschlossen werden kann.

Mit einem derartigen bekannten Sicherheitsgurtsystem ist unter anderem der Vorteil verbunden, daß infolge der Klemmung des Sicherheitsgurtes im Bereich des Umlenkbeschlages die danach noch für eine etwaige Dehnung infrage kommende Gurtlänge nur noch zwei Drittel der Gesamtlänge des Dreipunkt-Sicherheitsgurtes beträgt, womit ein wesentlicher Anteil an Gurtdehnung ausgeschieden ist. Gleichzeitig wird jedoch durch die Längsbewegung der Klemmeinrichtung das Gurtband gestrammt und somit die am Körper befindliche Gurtlose beseitigt, wobei die Strammkraft wesentlich näher am Umlenkbeschlag angreift und somit die gesamte Kraft für die Beseitigung der Gurtlose zur Verfügung steht.

Der vorliegenden Erfindung liegt nunmehr die Aufgabe zugrunde, die gattungsgemäße Vorrichtung noch zu bessern, und zwar dahingehend, daß durch eine bessere Anpassung des geometrischen Verlaufs des Sicherheitsgurtsystems an die Körperproportionen des angeschnallten Insassen eine den Insassen gefährdende Vorwärtsverlagerung seines Körpers noch sicherer vermieden wird.

Die erfindungsgemäße Lösung dieser Aufgabe ergibt sich einschließlich vorteilhafter Ausgestaltungen und Weiterbildungen aus dem Inhalt der Patentansprüche, welche dieser Beschreibung vorangestellt sind.

Mit der Erfindung ist der Vorteil verbunden, daß sich durch die selbsttätige Höhenverstellung der Klemmeinrichtung mit Antrieb der obere Anlenkpunkt für den Schultergurt des Sicherheitsgurtsystems in Form des Umlenkbeschlages insgesamt den Köperproportionen der angeschnallten Person auch in Abhängigkeit von deren Sitzposition und der Stellung des Fahrzeugsitzes im Fahrzeug jeweils anpaßt, so daß in jedem Fall immer ein optimaler Gurtverlauf im Sicherheitsgurtsystem gegeben ist, weswegen dann auch die Strammwirkung der Klemmeinrichtung mit Antrieb im Unfallgeschehen bestmöglich ihre Wirjung entfalten kann, da nur bei optimalem Gurtverlauf das Gurtband einerseits am wenigsten Gurtlose am Körper aufweist und andererseits ein bestmöglicher Einzug des Gurtbandes über den Umlenkbeschlag nach innen gegeben ist.

Es ist zwar hierzu aus der GB-A-2 110 921 für sich bereits eine Vorrichtung bekannt, bei der es darum geht, nach dem Anschnallen der auf dem entsprechenden Fahrzeugsitz befindlichen Person einen Zustandswert zu ermitteln, der diejenige Richtung betrifft, in welcher der Schultergurt des Sicherheitsgurtsystems von seinem oberen Befestigungs- oder Umlenkbeschlag her auf die Schulter und damit auf den Körper der angeschnallten Person auftrifft. Wenn sich dabei ergibt, daß der festgestellte Ist-Zustand dem empfehlenswerten Optimum nicht entspricht, so wird dies der angeschnallten Person entweder durch ein entsprechendes Signal so zum Bewußtsein gebracht, daß sie darauf reagiert und die Höhenlage des oberen Befestigungs- oder Umlenkbeschlages entsprechend korrigiert, oder aber die erforderliche Höhenverstellung wird durch entsprechende Mittel vollautomatisch und selbsttätig vorgenommen.

Mit dieser Vorrichtung ist jedoch der Nachteil verbunden, daß die Höhenverstellung aufgrund der unmittelbaren Kopplung von Ist-Zustandserfassung und automatisch erfolgender Nachstellung des Beschlages allen Bewegungen der angeschnallten Person sofort folgt. Jede Veränderung des Ist-Zustandes des Gurtverlaufes infolge auch nur geringfügiger oder einmaliger Bewegungen des angeschnallten Fahrzeuginsassen wird erfaßt und in entsprechend automatisch ablaufende Verstellvorgänge umgesetzt. Dies hat zur Folge, daß die vollautomatische Höhenverstellvorrichtung in kurzem Abstand den Beschlag ständig verschiebt und aufgrund dessen der Fahrer in seiner Konzentration auf den Straßenverkehr beeinträchtigt wird.

Daher ist mit der Lösung gemäß der vorliegenden Erfindung nun der besondere Vorteil verbunden, daß sich der angeschnallte Fahrzeuginsasse frei bewegen kann, ohne daß seine Bewegung sogleich in entsprechende Signale oder eine automatische Höhenverschiebung der Klemmeinrichtung und des Umlenkbeschlages umgesetzt wird. Sobald der Fahrzeuginsasse jedoch seine Position ändert, beispielsweise zur Entlastung der Arme, den Sitz nahe an das Lenkrad schiebt oder die Rückenlehne in ihrer Neigung verstellt, und somit auch eine Abweichung von dem für seine normale Sitzposition festgestellten optimalen Gurtverlauf herbeiführt, wird diese Abweichung erfaßt und in eine entsprechende Nachstellung der Höhenlage der Klemmeinrichtung mit Antrieb sowie des Umlenkbeschlages umgesetzt. Das Gleiche gilt dann, wenn eine andere Person mit anderen Körperproportionen das Fahrzeug besteigt und sich des Sicherheitsgurtsystems bedient.

Der Begriff der fortdauernden Änderung der Sitzposition gemäß der vorliegenden Erfindung wird durch die Wahl der zeitlichen Erfassung der Ist-Werte des für die Bestimmung des optimalen Gurtverlaufes ausgewählten Parameters im einzelnen ausgefüllt. So kann eine fortdauernde Änderung durch wenigstens zwei im zeitlichen Abstand festgestellte Abweichungen gleicher Größe von Soll- und Ist-Wert festgelegt sein, da dann davon auszugehen ist, daß die angeschnallte Person ihre Sitzposition dauerhaft verändert hat, oder aber die Wertermittlung erfolgt fortlaufend, und erst bei einer konstanten Abweichung über einen vorgegebenen, frei wählbaren Zeitraum wird die Reaktion entsprechend ausgelöst.

Weiterhin ist durch die Erfindung ausgeschlossen, daß auch geringfügige Soll-Ist-Abweichungen schon zur Auslösung der Reaktion führen, indem Abweichungen unterhalb eines vorbestimmten, technisch sinnvollen Wertes gar nicht erst in einer für den Überprüfungsvorgang maßgeblichen Weise erfaßt werden.

In der Zeichnung ist ein Ausführungsbeispiel der Erfindung beschrieben, welches nachstehend erläutert wird. Es zeigen :

Fig. 1 einen Kraftfahrzeug-Vordersitz in Seitenansicht mit zugeordneter B-Säule der Karosserie und von einem Insassen angelegten Sicherheitsgurt,

Fig. 2a u. b die höhenverstellbare Klemmeinrichtung mit Antrieb in einer schaubildlichen Darstellung,

Fig. 2c ein anderes Ausführungsbeispiel der Klemmeinrichtung gemäß Fig. 2b,

Fig. 3 ein Blockschaltbild der Einrichtung zum Soll-Ist-Wert-Vergleich für den Gurtverlauf.

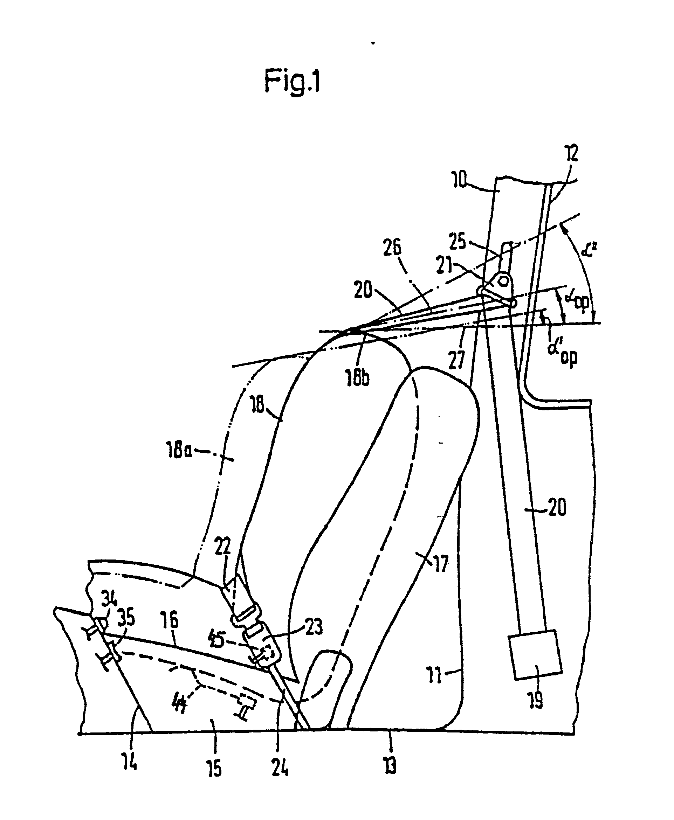

Gemäß Figur 1 hat eine Kraftfahrzeug-Karosserie eine B-Säule 10, eine vordere Türöffnung 11, ein seitliches Rückfenster 12, einen Boden 13 und eine Getriebeabdeckung 14. Im Bereich der Türöffnung 11 ist ein vorderer Einzelsitz 15 mit Sitzfläche 16 und Rückenlehne 17 angeordnet. Auf dem Sitz 15 sitzt eine große Person 18, bzw. eine kleine Person 18a. Die Person ist mit einem Dreipunkt-Sicherheitsgurt angeschnallt, der im wesentlichen aus Gurtaufroller 19, Schultergurt 20, Umlenkbeschlag 21, Beckengurt 22, Gurtschloß 23 und Verankerungsteil 24 besteht. Das Verankerungsteil 24 ist eigensteif flexibel und am Sitz 15 befestigt. Der Sitz ist dreifach verstellbar.

Die Personen 18, 18a sind sehr vereinfacht ohne Kopf und Hals dargestellt, da es hier im wesentlichen nur auf die Lage der jeweiligen Schulter 18b ankommt, auf die der Schultergurt 20 vom Umlenkbeschlag 21 her auftrifft, um von dort in üblicher Weise diagonal über Brust und Bauch der Person zur Schloßzunge des Gurtschlosses 23 zu verlaufen, wo das Gurtband in die Gegenrichtung umgelenkt wird und als Beckengurt 22 zum dritten Befestigungspunkt geführt ist. Da der Umlenkbeschlag 21 an der B-Säule 10 in einer schlitzartigen Führung 25 höhenverstellbar ist, kann das Gurtband des Schultergurtes 20 in mehr oder weniger schräg abfallender Richtung vom Umlenkbeschlag 21 zur Schulter 18b der jeweiligen Person verlaufen. Die Schräglage wird hier als Winkel alpha definiert, den die Mittenlängsachse 26 des stramm gespannten Schultergurtes 20 mit einer zugeordneten Horizontalen 27 einschließt. Dieser Winkel alpha hat zumindest theoretisch für jedes Personenmaß in Verbindung mit jeder Sitzstellung eine optimale Größe (Index op).

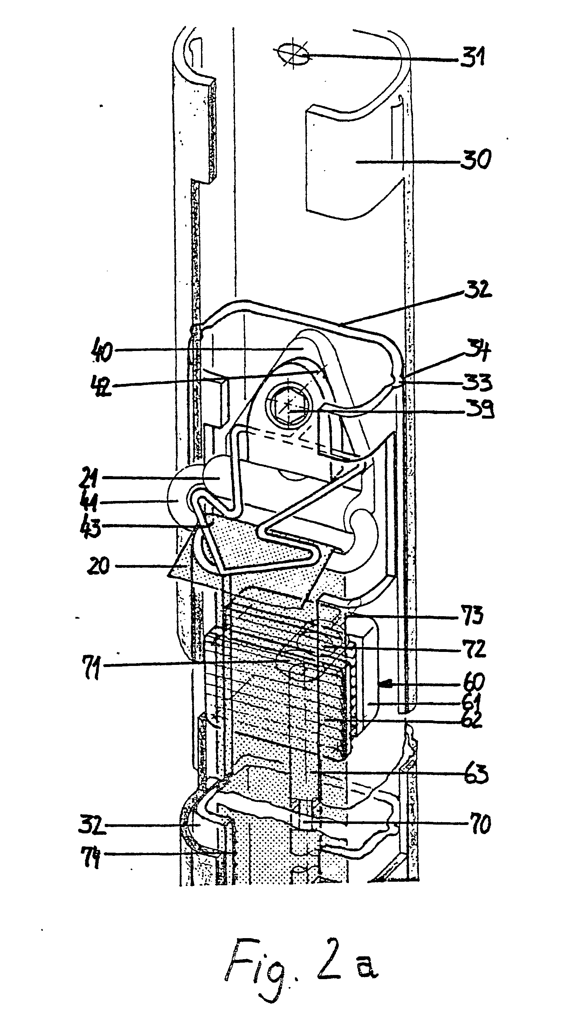

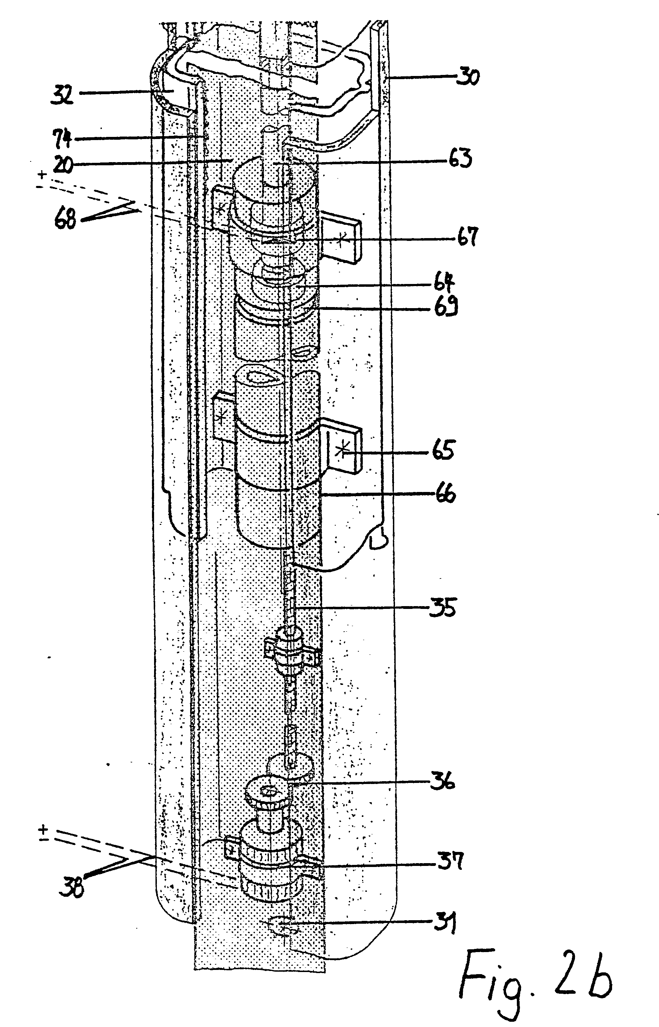

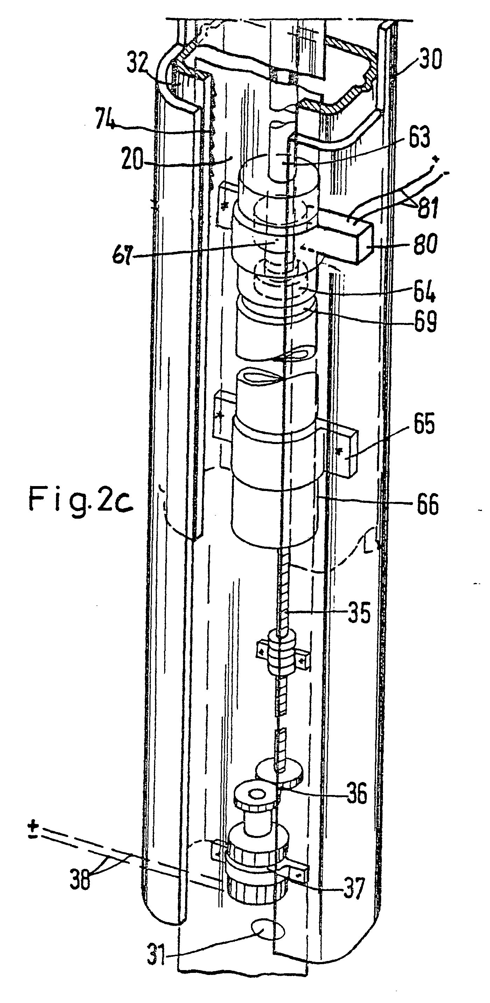

Wie sich aus der Figur 1 ergibt, ist der Umlenkbeschlag 21 dort in der Höhe so eingestellt, daß der Schultergurt 20 unter dem optimalen Gurtwinkel alpha op auf die Schulter 18b der großen Person 18 auftrifft. Für die kleine Person 18a wäre der optimale Gurtwinkel alpha' op derselbe wie für die große Person 18, wozu allerdings der Umlenkbeschlag 21 in seiner Führung 25 tiefer eingestellt werden muß. Der aus Figur 1 noch ersichtliche Gurtwinkel alpha″ ist zu groß und deshalb ungünstig und sicherheitstechnisch abzulehnen. Zur Ermittlung des optimalen Gurtwinkels, d. h. zur Feststellung des Ist-Zustandes des Gurtwinkels alpha und zur gegebenenfalls erforderlichen Korrektur bis zur Erreichung des Optimums als Soll-Zustand ist eine Abtasteinrichtung vorgesehen, die sich im einzelnen aus der Figur 2 ergibt.

Wie Figur 2 zunächst zu entnehmen ist, ist zur Anbringung der höhenverstellbaren Klemmeinrichtung mit Antrieb und Umlenkbeschlag 21 eine Schiene 30 vorgesehen, die mittels Befestigungsschrauben 31 an der B-Säule 10 des Kraftfahrzeuges befestigbar ist. Die Schiene 30 ist U-förmig ausgebildet mit nach innen C-förmig umgebogenen U-Schenkeln, so daß sich zwischen den Enden der umgebogenen U-Schenkel die schon genannte schlitzartige Führung 25 zur Höhenverstellung der Einheit ergibt.

In der U-Schiene 30 ist ein Läufer 32 in Schienenlängsrichtung beweglich angeordnet, der eine mit der Schiene 30 übereinstimmende Form aufweist, so daß die Bauteile 30, 32 ineinander geschoben gegeneinander beweglich sind, ohne daß der Läufer 32 aus der Schiene 30 heraustreten kann, da er hieran durch die C-förmigen Umbiegungen der U-Schenkel der Schiene 30 gehindert ist. Der Läufer 32 weist seinerseits ebenfalls C-förmig umgebogene U-Schenkel auf, so daß es zu einer formschlüssigen Verbindung zwischen dem Läufer 32 und der Schiene 30 kommt. Darüberhinaus weist der Läufer 32 beiderseits an seinen U-Schenkeln nach außen gerichtete Vorsprünge 33 auf, die in längsgerichteten Nuten 34 an den Innenseiten der U-Schenkel der Schiene 30 geführt sind und so dem Läufer 32 eine zusätzliche Führungsstabilität vermitteln.

Am unteren Ende des Läufers 32 ist eine Zahnstange 35 angeschlagen, die über einen Zahntrieb 36 mit einem Elektromotor 37 verbunden ist, welcher über elektrische Zuleitungen 38 mit Energie versorgt ist.

Auf dem Läufer 32 ist auf dessen Längserstreckung die verfahrbare Klemmeinrichtung 60 montiert, welche entsprechend dem Ausführungsbeispiel im EP-A-0 148 747 ausgebildet ist. Die beiderseits des Gurtbandes 20 angeordneten Klemmbacken 61, 62 sind am oberen Ende einer Kolbenstange 63 angeordnet, an deren Ende ein Kolben 64 sitzt, der seinerseits in einem mittels Schellen 65 auf dem Läufer 32 befestigten Führungsrohr 66 eingeschlossen geführt ist. Die Länge der Kolbenstange 63 bzw. der Abstand zwischen Klemmeinrichtung 60 und Führungsrohr 66 ist durch das Maß der gewünschten Gurtstrammung bestimmt.

In dem Bereich zwischen dem oberen Ende des Führungsrohres 66 und der durch die Ruhestellung des Kolbens 64 festgelegten Lage des Kolbens 64 ist eine Treibladung 67 angeordnet, die über Zuleitungen 68 mit einem sie auslösenden fahrzeugseitigen Sensor verbunden ist. Unterhalb des Kolbens 64 weist das Führungsrohr 66 noch eine Einschnürung 69 auf.

Die Kolbenstange 63 ist mit einer Längsmittenbohrung 70 sowie an ihrem unteren Ende am Ansatz des Kolbens 64 mit Querbohrungen versehen. Am oberen Ende der Kolbenstange 63 mündet die Längsbohrung 70 in eine in der Klemmeinrichtung 60 ausgebildete Kolbenkammer 71. Die bewegliche Klemmbacke sitzt am vorderen Ende eines Kolbens 72, der in der Kolbenkammer 71 beweglich geführt ist. An seiner der beweglichen Klemmbacke abgewandten Seite ragt der Kolben 72 mit einer Kolbenstange 73 aus der Klemmeinrichtung 60 heraus.

Damit die Klemmeinrichtung 60 nach ihrer Auslösung und Verfahrung nach unten unter der Wirkung der auf das Gurtband ausgeübten Zugkraft nicht wieder nach oben nachgeben kann, weist der Läufer 32 an seinem mit den Klemmbacken 61, 62 in Berührung kommenden Bereich Verzahnungen 74 auf, in welche die Klemmbacken 61, 62 hineinlaufen und sich dort verrasten.

Die Funktion dieser Klemmeinrichtung, die unabhängig von der erfindungsgemäßen Höhenverstellung der Klemmeinrichtung in der B-Säule in Abhängigkeit von den Körpermaßen der angeschnallten Person im Unfallgeschehen abläuft, ist folgendermaßen zu beschreiben: Durch die im Unfallgeschehen vom Fahrzeugsensor ausgelöste Zündung der Treibladung 67 dehnt sich das entstehende Druckgas aus und tritt zunächst in die Querbohrungen am unteren Ende der Kolbenstange 63, da der Kolben 64 aufgrund seiner Fixierung durch die Einschnürung 69 im Führungsrohr 66 noch nicht nach unten bewegbar ist. Eine weitere Sicherung gegen eine Verschiebung der Kolbenstange 63 und damit der Klemmeinrichtung 60 nach unten ist in der im offenen Zustand der Klemmeinrichtung 60 aus dieser herausragenden Kolbenstange 73 des Kolbens 72 zu sehen, wobei die Kolbenstange 73 mit ihrem freien Ende in ein fahrzeugfestes Teil eingreift.

Das Druckgas wird über die Querbohrungen und die Längsbohrung 70 in der Kolbenstange 63 zunächst in die Kolbenkammer 71 in der Klemmeinrichtung 60 geführt und drückt dort den Kolben 72 mit der beweglichen Klemmbacke in Richtung auf die feststehende Klemmbacke. Gleichzeitig bewegt sich die Kolbenstange 73 aus dem fahrzeugfesten Teil und wird bündig mit der Innenseite der Führungsschiene. Nach Abschluß der Bewegung des Kolbens 72 baut sich durch das nachströmende Gas ein solcher Druck auf, der anschließend den Kolben 64 über die Einschnürung 69 im Führungsrohr 66 hinaus nach unten bis in die Endstellung treibt. Auf diese Weise wird die Klemmeinrichtung 60 mit dem geklemmten Gurtband nach unten bis zum Verhaken an den Verzahnungen 74 im Läufer 32 bewegt und das Gurtband so gestrammt. Die Verzahnungen 74 bewirken, daß die Klemmeinrichtung 60 in ihrer Endstellung darin auch nach einem Abfall des Gasdruckes in der geklemmten Position gehalten wird.

Wie aus Figur 2c ersichtlich, ist nach einem bevorzugten Ausführungsbeispiel der Erfindung von einer Verbindung der Treibladung 67 mit dem zentralen Fahrzeugsensor abgesehen worden, vielmehr ist der Treibladung 67 nun unmittelbar ein eigener Sensor 80 zugeordnet, welcher über Zuleitungen 81 an das elektrische Netz des Kraftfahrzeuges angeschlossen ist, so daß eine Stromversorgung der Einheit 67, 80 gegeben ist. Dieser Vorschlag ist mit dem Vorteil verbunden, daß nunmehr nicht mehr ausgehend vom Haupt-Fahrzeugsensor das gesamte Fahrzeug mit getrennten Signalkabeln verkabelt werden muß, an welche die jeweiligen Treibladungen 67 der verschiedenen Sicherheitsgurtsysteme auf den mehreren Fahrzeugsitzen anzuschließen sind. Mit zunehmender Anzahl der Fahrzeugsitz-Sicherheitsgurtsysteme wird nämlich auch der Haupt-Fahrzeugsensor in seiner Bauform sehr aufwendig und teuer, da er entsprechend konditioniert und eingerichtet werden muß.

Die nach dem Ausführungsbeispiel gemäß Figur 2c vorgesehene dezentrale Anordnung eines Sensors 80 zu jedem Antrieb 67 bietet den Vorteil, daß der Sensor 80 selbst kleiner und billiger gehalten, beispielsweise als Microchip ausgebildet sein kann, da der Sensor 80 jeweils nur eine einzige Treibladung 67 auslösen muß. Hierzu kommt in vorteilhafter Weise, daß jeder Sensor 80 mit den genau auf seine Position im Kraftfahrzeug berechneten Verzögerungswerten im Hinblick auf die Auslösung der Treibladung 67 konditioniert werden kann, womit eine größere Genauigkeit und Sicherheit bei der Auslösung der Klemmvorrichtung 60 verbunden ist. Der Sensor 80 selbst kann dabei als dezentraler Einzelsensor in der Art ausgebildet sein, wie ein solcher allerdings als Zentralsensor für vier Sicherheitsgurtsysteme in einem Kraftfahrzeug in der DE-OS 3 326 277 beschrieben ist.

Es ist im Hinblick auf den Reparaturaufwand nach Eintreten einer die Auslöseschwelle des Sensors überschreitenden negativen Beschleunigung des Kraftfahrzeuges besonders von Vorteil, wenn jeder Einzelsensor erst bei Anlegen des ihm zuzuordnenden Sicherheitsgurtsystems funktionsbereit gemacht wird, indem die für den Sensor erforderliche Stromversorgung erst durch den Anlegevorgang sichergestellt, vorzugsweise durch Einstecken der Schloßzunge in das Gurtschloß mit Schließen eines im Schloß entsprechend vorgesehenen Kontaktes erreicht wird. Auf diese Weise kann in vorteilhafter Weise sichergestellt werden, daß nach Überschreiten der Auslöseschwelle nur die Sicherheitsgurtsysteme ausgelöst werden, welche am Körper eines angeschnallten Insassen anliegen, während die unbenutzten Systeme von einer Auslösung verschont sind. Damit ist nach Auftreten derartiger Situationen eine erhebliche Kosteneinsparung bei der Wiederherstellung des Kraftfahrzeuges verbunden.

Ein Teil der erfindungsgemäßen Einrichtung zur selbsttätigen Höhenverstellung der Klemmeinrichtung 60 mittels der Bewegung des Läufers 32 in der an der B-Säule 10 des Kraftfahrzeuges befestigten U-Schiene 30 ist am oberen Ende des Läufers 32 vorgesehen. Hier ist der Umlenkbeschlag 21 auf dem Läufer 32 mittels einer Schraube 39 befestigt, wobei der Umlenkbeschlag 21 aus einer Lasche 40 und aus einer Öse 41 für den hindurchgeführten Schultergurt 20 besteht. Auf der Außenseite der Lasche 40 ist eine Hutze 42 angeordnet, die einerseits zur schwenkbeweglichen Lagerung eines beispielsweise aus Draht gebogenen oder aus Kunststoff hergestellten Tastorganes 43 und andererseits zur Aufnahme einer nicht dargestellten Kraftmeßdose dient, welche von einer ebenfalls nicht dargestellten winkelförmigen Abbiegung des Tastorganes 43 beaufschlagt wird. Das Tastorgan 43 hat im übrigen pfeilähnliche Gestalt und ist so geformt, daß es das Gurtband des Schultergurtes 20 oben und unten umfaßt, so daß auch sehr kleine Veränderungen der Spannungen im Gurtband festgestellt und der Kraftmeßdose übermittelt werden können. Dabei reagiert das Tastorgan 43 im wesentlichen auch auf die Richtung zwischen Umlenkbeschlag 21 und Schulter 18b der angeschnallten Person, wobei jedoch auf den Druck abgestellt wird, den das Gurtband durch seinen Verlauf in fühlbarer Weise auf den Körper der Person ausübt. Die Kraftmeßdose signalisiert dann ebenfalls den falschen Gurtwinkel, und somit kann die Auflagerkraft als Parameter für die Ermittlung des Ist-Wertes des Gurtverlaufs herangezogen werden.

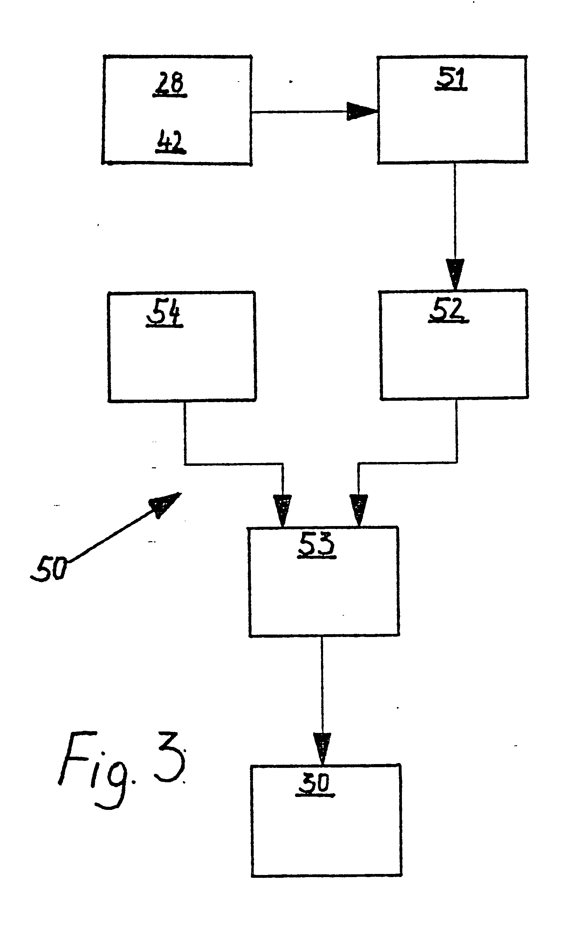

Die Umsetzung der vorbeschriebenen, durch die Abtastvorrichtung festgestellten Abweichung des tatsächlichen Gurtverlaufs vom optimalen Gurtverlauf in eine entsprechende Höhenverstellung des Läufers 32 mit darauf angeordneter Klemmeinrichtung 60 mittels des Motors 37 geschieht in einer elektronischen Werterfassungs- und Rechenanlage 50, wie sie als Blockschaltbild in Figur 3 dargestellt ist, und welche beispielsweise selbst am Motor 37 angeordnet sein kann. Die Veränderungen an der am Umlenkbeschlag 21 angebrachten Kraftmeßdose werden von einem Wegaufnehmer 51 induktiv erfaßt, wodurch die Ist-Wert-Ermittlung des Parameters vorgenommen ist. Dem Wegaufnehmer 51 nachgeschaltet ist eine Analog-Digital-Wandlereinheit 52, in welcher der vom Wegaufnehmer 51 aufgenommene analoge Wert für den Einsatz im Rechner digitalisiert wird.

Der Ausgangswert der Analog-Digital-Wandlereinheit 52 wird als Eingangswert einem Rechner 53, in welchem der Soll-Wert für den als optimal erkannten Gurtwinkel sowie die davon zulässigen Abweichungen abgespeichert sind, zugeführt. Als weiterer Eingang erreicht den Rechner 53 der Impuls eines Zeitgliedes 54, welches beispielsweise aus einem Quarz bestehen kann, und das alle dreißig Sekunden einen dem Rechner zuzuleitenden Impuls abgibt. Die vorstehend genannte Größe des Zeitabstandes der Impulse ist nur beispielhaft angegeben. Sie kann nach oben und insbesondere nach unten erweitert werden, ohne daß hierdurch der Grundgedanke der Erfindung berührt wird. Jeweils bei Eingang eines Impulses vom Zeitglied 54 geschieht im Rechner der Wertvergleich zwischen dem gespeicherten Soll-Wert und den von der Analog-Digital-Wandlereinheit 52 ständig hereinkommenden Ist-Werten.

Bei einem nicht weiter dargestellten Ausführungsbeispiel ist das Zeitglied 54 an den Wegaufnehmer 51 geschaltet, so daß schon die Ist-Wert-Erfassung in einem vom Zeitglied 54 vorgegebenen zeitlichen Rhythmus erfolgt.

Sobald der Rechner 53 eine fortdauernde Überschreitung der ihm als zulässig eingegebenen Abweichung von Soll- und Ist-Wert in Form von wenigstens zwei aufeinanderfolgenden Vergleichsgrößen, die oberhalb der eingespeicherten Abweichung liegen, registriert, führt dies zur Abgabe von Steuerbefehlen an den Motor 37 für die Bewegung des Läufers 32 in der Schiene 30, wobei die Steuerbefehle derart gestaltet sind, daß sie einerseits eine Links- und Rechtsdrehung des Motors zur Höhenverstellung des Läufers 32 nach oben oder unten bewirken, und daß sie andererseits auch das Maß der Motorbewegung und damit der Höhenverstellung des Läufers 32 festlegen. Letzteres kann erreicht werden durch die Einteilung der Steuerbefehle in sogenannte Sprungbefehle, wobei beispielsweise ein Digitalsprung eine Umdrehung des Motors 37 veranlaßt, so daß je nach Größe der ermittelten Soll-Ist-Abweichung eine entsprechende Anzahl von Sprungbefehlen vom Rechner 53 an den Motor 37 abgegeben wird.

Zur Ausschaltung der nachstellenden Wirkung der Werterfassungs- und Rechenanlage 50 während der Zeit, in welcher der Sicherheitsgurt nicht benutzt wird, d. h. insbesondere wenn sich keine Person auf dem Sitz 15 befindet, ist beispielsweise ein Sitzflächen-Kontaktschalter 44 oder auch ein in das Gurtschloß 23 eingebauter Schalter 45 vorgesehen, die beide auch noch mit einem allgemeinen Signal — Licht oder Schall — gekoppelt sein können, welches zum Anlegen des Sicherheitsgurtes als solchem auffordert. Es läßt sich aber auch mittels einer entsprechenden Formgebung des Tastorganes 43 dessen Abheben von der Kraftmeßdose hervorrufen, wenn das Gurtband des Schultergurtes 20 unter der Wirkung des Gurtaufrollers 19 an der B-Säule 10 gerade nach unten verläuft.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

**Patentansprüche**

1. Sicherheitsgurtsystem, insbesondere für Kraftfahrzeuge, mit einem Dreipunkt-Sicherheitsgurt, einem an einem Fahrzeugaufbauteil befestigten selbstsperrenden Gurtaufroller sowie einer an dem Fahrzeugaufbauteil angeordneten Klemmeinrichtung für das Gurtband, die wenigstens eine bewegliche Klemmbacke aufweist, wobei die Klemmeinrichtung an dem Fahrzeugaufbauteil beweglich geführt und für die Bewegung der Klemmeinrichtung ein Antrieb vorgesehen ist, dadurch gekennzeichnet, daß die Klemmeinrichtung (60) mit Antrieb (63, 64, 67) im Fahrzeugaufbauteil (10) höhenverstellbar eingerichtet ist und daß zur selbsttätigen Höhenverstellung der Klemmeinrichtung (60) eine die Lage des Gurtbandes bezüglich wenigstens eines Parameters von dessen Wirkungsverbindung mit der angeschnallten Person abtastende und einen Vergleich des bezüglich des oder der ausgewählten Parameter ermittelten Ist-Wertes mit einem feststehenden Soll-Wert vornehmende Einrichtung (50) vorgesehen ist, wobei die Höhenverstellung bei fortdauerndem Überschreiten einer vorbestimmten Abweichung zwischen Soll- und Ist-Wert ausgelöst wird.

2. Sicherheitsgurtsystem nach Anspruch 1, dadurch gekennzeichnet, daß zur innenseitigen Aufnahme der Bauteile (60, 63, 64, 67, 21) und zu deren Anbringung an dem Fahrzeugaufbauteil (10) eine U-förmige Schiene (30) mit nach Innen C-förmig umgebogenen U-Schenkeln und einem dazwischen gebildeten Längsschlitz (25) vorgesehen ist.

3. Sicherheitsgurtsystem nach Anspruch 2, dadurch gekennzeichnet, daß die Schiene (30) mittels Verschraubungen (31) an dem Fahrzeugaufbauteil (10) befestigbar ist.

4. Sicherheitsgurtsystem nach einem der Ansprüche 1 - 3, dadurch gekennzeichnet, daß die Klemmeinrichtung (60) mit Antrieb (63, 64, 67) sowie ein Umlenkbeschlag (21) an einem in der U-Schiene (30) beweglichen Läufer (32) befestigt sind.

5. Sicherheitsgurtsystem nach Anspruch 4, dadurch gekennzeichnet, daß der Läufer (32) U-förmig entsprechend der Form der Schiene (30) mit ebenfalls C-förmig umgebogenen U-Schenkeln ausgebildet ist und einen Längsschlitz (25) zur Führung des Gurtbandes (20) aufweist.

6. Sicherheitsgurtsystem nach Anspruch 5, dadurch gekennzeichnet, daß der Läufer (32) beidseitig seines Führungsschlitzes (25) seitwärts von den U-Schenkeln abstehende Vorsprünge (33) aufweist, die in entsprechend angeordneten Längsnuten (34) in der U-Schiene (30) geführt sind.

7. Sicherheitsgurtsystem nach einem der Ansprüche 1 - 6, dadurch gekennzeichnet, daß der Läufer (32) von einer Zahnstange (35) bewegbar ist, welche ihrerseits über ein Getriebe (36) mit einem Motor (37) in Verbindung steht.

8. Sicherheitsgurtsystem nach Anspruch 7, dadurch gekennzeichnet, daß der Motor (37) von der Einrichtung (50) ansteuerbar ist.

9. Sicherheitsgurtsystem nach einem der Ansprüche 1 - 8, dadurch gekennzeichnet, daß als Parameter für die Prüfung und Auslösung der selbsttätigen Höhenverstellung diejenige Kraft vorgesehen ist, mit welcher das Gurtband (20) auf dem Körper, insbesondere der Schulter, der Person (18) auflagert.

10. Sicherheitsgurtsystem nach Anspruch 9, dadurch gekennzeichnet, daß als vorbestimmte Abweichung ein Wert von ein Zehntel Newton vorgegeben ist, so daß nur Kraftänderungen oberhalb dieser Abweichung zur Auslösung der Reaktion führen.

11. Sicherheitsgurtsystem nach Anspruch 9 oder 10, dadurch gekennzeichnet, daß der Vergleich von Soll- und Ist-Wert in einem festgelegten zeitlichen Abstand erfolgt.

12. Sicherheitsgurtsystem nach Anspruch 9 oder 10, dadurch gekennzeichnet, daß die Erfassung der Ist-Werte des Parameters in einem festgelegten zeitlichen Abstand erfolgt.

13. Sicherheitsgurtsystem nach Anspruch 11 oder 12, dadurch gekennzeichnet, daß der zeitliche Abstand dreißig Sekunden beträgt.

14. Sicherheitsgurtsystem nach einem der Ansprüche 9 - 13, dadurch gekennzeichnet, daß die Höhenverstellung des Läufers (32) bei wenigstens zwei, im zeitlichen Abstand festgestellten Abweichungen etwa gleicher Größe ausgelöst wird.

15. Sicherheitsgurtsystem nach einem der Ansprüche 9 - 14, dadurch gekennzeichnet, daß die Einrichtung (50) aus einer elektronischen Werterfassungs- und Rechenanlage besteht.

16. Sicherheitsgurtsystem nach Anspruch 15, dadurch gekennzeichnet, daß ein Wegaufnehmer (51) in Reihe einer Analog-Digital-Wandlereinheit (52) vorgeschaltet ist und daß der Ausgang der Einheit (52) zusammen mit dem Ausgang eines einem Rechner (53) parallel zur Einheit (52) vorgeschalteten Zeitgliedes (54) den Eingang für den Rechner (53) bilden, welcher seinerseits ein Steuersignal abgibt.

17. Sicherheitsgurtsystem nach Anspruch 16, dadurch gekennzeichnet, daß der Rechner (53) mit seinem Steuersignal den Stellmotor (37) für den Läufer (32) steuert.

18. Sicherheitsgurtsystem insbesondere nach Anspruch 4, dadurch gekennzeichnet, daß jedem Antrieb (63, 64, 67) für jede Klemmeinrichtung (60) im Kraftfahrzeug ein eigener Sensor (80) zugeordnet ist, welcher über Zuleitungen (81) an die Energieversorgung des Kraftfahrzeuges gekoppelt ist.

19. Sicherheitsgurtsystem nach Anspruch 18, dadurch gekennzeichnet, daß Antrieb (67) und Sensor (80) eine Baueinheit bilden, wobei jeder Sensor (80) entsprechend seiner Räumlichen Anordnung im Kraftfahrzeug verzögerungsgerecht konditioniert ist.

20. Sicherheitsgurtsystem nach Anspruch 18 oder 19, dadurch gekennzeichnet, daß die Stromversorgung (81) jedes Einzelsensors (80) an das Anlegen des Sicherheitsgurtsystems, vorzugsweise an das Schließen des Gurtschlosses, gekoppelt ist.

## Claims

1. Safety belt system, especially for motor vehicles, having a three-point safety belt, a self-locking belt reel-in mechanism which is mounted on a structural part of the vehicle, as well as, for the belt strap, a clamping mechanism which is disposed on the structural part of the vehicle and has at least one movable clamping jaw, with the clamping mechanism being movably guided on the structural part of the vehicle, and being provided with a drive mechanism for this movement, characterized in that the clamping mechanism (60), along with the drive mechanism (63, 64, 67), are disposed in the structural part (10) of the vehicle in such a way as to be vertically adjustable, and in that, for automatic vertical adjustment of the clamping mechanism (60), an arrangement (50) is provided which not only senses the position of the belt strap relative to at least one parameter of its functional connection with the strapped-in person, but also undertakes a comparison, with a fixed desired value, of the actual value determined relative to the selected parameter or parameters; the vertical adjustment is initiated when a predetermined deviation between the desired value and the actual value is continuously exceeded.

2. Safety belt system according to claim 1, characterized in that connected to the structural part (10) of the vehicle is a U-shaped guide rail (30) for receiving therein the components (60, 63, 64, 67, 21), with the guide rail thus effecting disposition of these components on the structural part; the guide rail is provided with U-pieces which are bent inwardly toward one another in a C-shaped manner, and between which is formed an elongated slot (25).

3. Safety belt system according to claim 2, characterized in that the guide rail (30) is mounted on the structural part (10) of the vehicle by means of screws (31).

4. Safety belt system according to one of the claims 1-3, characterized in that a slide (32) is movably disposed in the U-shaped guide rail (30), with the guide fitting (21) and the clamping mechanism (60), along with its drive mechanism (63, 64, 67), being mounted on the slide.

5. Safety belt system according to claim 4, characterized in that the slide (32) is U-shaped in conformity to the shape of the guide rail (30), and is also provided with U-pieces which are bent inwardly toward one another in a C-shaped manner, and between which is formed an elongated slot (25) for guiding the belt strap (20).

6. Safety belt system according to claim 5, characterized in that the U-pieces of the slide (32) may be provided with laterally projecting bosses (33) on both sides of the guide slot (25) thereof; the U-guide rail (30) is then provided with corresponding longitudinal grooves (34) for guiding these bosses.

7. Safety belt system according to one of claims 1-6, characterized in that the slide (32) is movable by means of a rack (35), which, in turn, is connected via a gear drive (36) to a motor (37).

8. Safety belt system according to claim 7, characterized in that the motor (37) can be actuated by the sensing and value-comparison arrangement (50).

9. Safety belt system according to one of the claims 1-8, characterized in that the parameter for the sensing and the initiation of the automatic vertical adjustment is the force with which the belt strap (20) rests upon the body, and especially the shoulder, of the person (18) who is strapped in.

10. Safety belt system according to claim 9, characterized in that the predetermined designated deviation is set at a value of one-tenth of a Newton, so that only force deviations greater than this designated deviation lead to initiation of the reaction.

11. Safety belt system according to claim 9 or 10, characterized in that the comparison of the actual value with the desired value is effected at fixed time intervals.

12. Safety belt system according to claim 9 or 10, characterized in that the detection of the actual values of the parameter are effected at fixed time intervals.

13. Safety belt system according to claim 11 or 12, characterized in that the time periods are thirty seconds.

14. Safety belt system according to one of the claims 9-13, characterized in that the vertical adjustment of the slide (32) is initiated in response to at least two deviations, of approximately the same magnitude, which are determined at time intervals relative to one another.

15. Safety belt system according to one of the claims 9-14, characterized in that the sensing and value-comparison arrangement (50) is an electronic value-determining and computing unit.

16. Safety belt system according to claim 15, characterized in that a displacement pickup (51) is connected in series with an analog-digital converter (52), with the output of the converter (52), together with the output of a timing element (54) ahead of and parallel to a computing unit (53), forming the input for this computing unit (53), which, in turn, emits a control signal.

17. Safety belt system according to claim 16, characterized in that the control signal of the computing unit (53) controls the adjusting motor (37) for the slide (32).

18. Safety belt system, particularly following claim 4, characterized in that a separate sensor (80) for each drive mechanism (63, 64, 67) of each clamping mechanism (60) is provided, with each sensor (80) being coupled via lines (81) to an energy supply system for the vehicle.

19. Safety belt system according to claim 18, characterized in that each sensor (80) and its drive mechanism (63, 64, 67) are a unit, with each sensor (80) being conditioned for appropriate time delay in conformity with its position in the vehicle.

20. Safety belt system according to claim 18 or 19, characterized in that the energy supply (81) of each single sensor (80) is coupled to the strapping of the belt system, preferably to the closing of the belt buckle.

## Revendications

1. Système de ceinture de sécurité, notamment dans des véhicules automobiles, avec une ceinture de sécurité à trois points de fixation, un enrouleur de ceinture autobloquant fixé à un élément de la carrosserie du véhicule, et un dispositif de serrage pour la sangle de ceinture disposé sur l'élément de la carrosserie du véhicule, dispositif qui présente une mâchoire de serrage mobile, le dispositif de serrage étant guidé en déplacement sur l'élément de la carrosserie du véhicule, et un moyen d'entraînement étant prévu pour le déplacement du dispositif de serrage, caractérisé en ce que le dispositif de serrage (60) muni du moyen d'entraînement (63, 64, 67) est monté réglable en hauteur dans l'élément (10) de la carrosserie du véhicule, et en ce qu'il est prévu, pour le réglage en hauteur automatique du dispositif de serrage (60), un dispositif (50) qui détecte la position de la sangle de ceinture en ce qui concerne au moins un paramètre de sa liaison fonctionnelle avec la personne ceinte, et qui entreprend une comparaison avec une valeur de consigne fixe de la valeur effective déterminée du ou des paramètres sélectionnés, le réglage en hauteur étant déclenché en cas de dépassement persistant d'un écart prédéterminé entre la valeur de consigne et la valeur effective.

2. Système de ceinture de sécurité selon la revendication 1, caractérisé en ce qu'il est prévu, pour recevoir du côté intérieur les éléments constructifs (60, 63, 64, 67, 21) et pour les monter sur l'élément (10) de la carrosserie du véhicule, une glissière en forme de U (30) dont les branches du U, entre lesquelles est formée une fente longitudinale (25), sont recourbées en forme de C vers l'intérieur.

3. Système de ceinture de sécurité selon la revendication 2, caractérisé en ce que la glissière (30) peut être fixée sur l'élément (10) de la carrosserie du véhicule à l'aide d'assemblages vissés (31).

4. Système de ceinture de sécurité selon l'une des revendications 1 à 3, caractérisé en ce que le dispositif de serrage (60) muni du moyen d'entraînement (63, 64, 67), ainsi qu'une ferrure de renvoi (21), sont fixés sur un curseur (32) mobile dans la glissière en U (30).

5. Système de ceinture de sécurité selon la revendication 4, caractérisé en ce que le curseur (32) est configuré en forme de U conformément à la forme de la glissière (30), avec également des branches du U recourbées en forme de C, et présente une fente longitudinale (25) pour le guidage de la sangle de ceinture (20).

6. Système de ceinture de sécurité selon la revendication 5, caractérisé en ce que le curseur (32) présente de part et d'autre de sa fente de guidage (25), des parties en saillie (33) partant latéralement des branches du U, parties qui sont guidées dans des rainures longitudinales (34), pratiquées dans la glissière en U (30) et disposées d'une manière correspondante.

7. Système de ceinture de sécurité selon l'une des revendications 1 à 6, caractérisé en ce que le curseur (32) peut être déplacé par une crémaillère (35), qui est elle-même reliée à un moteur (37) par l'intermédiaire d'un mécanisme de transmission (36).

8. Système de ceinture de sécurité selon la revendication 7, caractérisé en ce que le moteur (37) peut être asservi par le dispositif (50).

9. Système de ceinture de sécurité selon l'une des revendications 1 à 8, caractérisé en ce qu'il est prévu comme paramètre pour le contrôle et le déclenchement du réglage en hauteur automatique la force avec laquelle la sangle de ceinture (20) s'applique sur le corps, et notamment l'épaule, de la personne (18).

10. Système de ceinture de sécurité selon la revendication 9, caractérisé en ce qu'une valeur d'un dixième de Newton est allouée comme écart prédéterminé, de sorte que seules des modifications de force supérieures à cet écart engendrent le déclenchement de la réaction.

11. Système de ceinture de sécurité selon la revendication 9 ou 10, caractérisé en ce que la comparaison entre la valeur de consigne et la valeur effective s'effectue dans un intervalle de temps fixé.

12. Système de ceinture de sécurité selon la revendication 9 ou 10, caractérisé en ce que la détection des valeurs effectives du paramètre s'effectue dans un intervalle de temps fixé.

13. Système de ceinture de sécurité selon la revendication 11 ou 12, caractérisé en ce que l'intervalle de temps est de trente secondes.

14. Système de ceinture de sécurité selon l'une des revendications 9 à 13, caractérisé en ce que le réglage en hauteur du curseur (32) est déclenché par la détermination dans l'intervalle de temps d'au moins deux écarts de valeur approximativement identique.

15. Système de ceinture de sécurité selon l'une des revendications 9 à 14, caractérisé en ce que le dispositif (50) consiste en une unité électronique d'enregistrement et de calcul de données.

16. Système de ceinture de sécurité selon la revendication 15, caractérisé en ce qu'un capteur de déplacement (51) est couplé en amont et en série à un convertisseur analogique-numérique (52), et en ce que la sortie de l'unité (52) forme, conjointement avec la sortie d'un relais de temporisation (54) couplé en amont à un calculateur (53) parallèlement à l'unité (52), l'entrée pour le calculateur (53) qui délivre lui-même un signal de commande.

17. Système de ceinture de sécurité selon la revendication 16, caractérisé en ce que le calculateur (53) commande par son signal de commande le servomoteur (37) pour le curseur (32).

18. Système de ceinture de sécurité, notamment selon la revendication 4, caractérisé en ce qu'un capteur individuel (80) est associé à chaque moyen d'entraînement (63, 64, 67) pour chaque dispositif de serrage (60) dans le véhicule automobile, capteur qui est couplé par des lignes d'alimentation (81) à l'alimentation en énergie électrique du véhicule automobile.

19. Système de ceinture de sécurité selon la revendication 18, caractérisé en ce que le moyen d'entraînement (67) et le capteur (80) forment une unité constructive, chaque capteur (80) étant conditionné en matière de temporisation en fonction de sa disposition spatiale dans le véhicule automobile.

20. Système de ceinture de sécurité selon la revendication 18 ou 19, caractérisé en ce que l'alimentation électrique (81) de chaque capteur individuel (80) est couplée à la mise en place du système de ceinture de sécurité, et de préférence à la fermeture de la boucle de ceinture.

# Fig.1

Fig. 2 a

Fig. 2b

Fig.2c

28
42

51

54

52

50

53

Fig. 3

30